# FASCICULE DE BREVET EUROPEEN

(11) **EP 4 193 283 B1**
(45) Date de publication et mention de la délivrance du brevet: **07.05.2025**
(21) Numéro de dépôt: 21739638.1
(22) Date de dépôt: 02.07.2021
(51) Int. Cl.: G06F 21/32

(54) **PROCÉDÉ POUR GÉNÉRER UN DOCUMENT NUMÉRIQUE SÉCURISÉ STOCKÉ SUR UN TERMINAL MOBILE ET ASSOCIÉ À UNE IDENTITÉ NUMÉRIQUE**
VERFAHREN ZUR ERZEUGUNG EINES SICHEREN DIGITALEN DOKUMENTS, DAS AUF EINEM MOBILEN ENDGERÄT GESPEICHERT IST UND MIT EINER DIGITALEN IDENTITÄT ASSOZIIERT IST
METHOD FOR GENERATING A SECURE DIGITAL DOCUMENT STORED ON A MOBILE TERMINAL AND ASSOCIATED WITH A DIGITAL IDENTITY

(30) Priorité: 04.08.2020 FR 2008260
(43) Date de publication de la demande: 14.06.2023
(73) Titulaire: Imprimerie Nationale, 75116 Paris (FR)
(72) Inventeur: MALBOROUGT, Jean-Noël, 78140 VELIZY-VILLACOUBLAY (FR)
(74) Mandataire: Brun, Philippe Alexandre Georges
(86) Numéro de dépôt international: PCT/EP2021/068330
(87) Numéro de publication internationale: WO 2022/028788

(56) Documents cités:
- EP-A1- 2 237 519
- EP-A1- 3 709 567
- WO-A1-2019/093573
- US-A1- 2019 190 718
- LOPEZ P ET AL: "E-Passports as a Means Towards the First World-Wide Public Key Infrastructure", J LNCS, 1 January 2007 (2007-01-01), pages 34 - 48, XP055796631, Retrieved from the Internet <URL:https://link.springer.com/content/pdf/10.1007/978-3-540-73408-6_3.pdf> [retrieved on 20210419]

## Description

### DESCRIPTION

L'invention concerne un procédé pour générer un document numérique pouvant être associé à une identité numérique régalienne. Ce document peut être la représentation d'un livret ou d'une carte. Dans la suite de la description, on désigne sous l'expression e-livret, un document numérique de plusieurs pages se présentant sous la forme d'un livret digital sur un terminal mobile par exemple équipé de moyens de communication. Dans le cadre de déplacements ou de voyages, par exemple, le livret numérique est visuellement un « jumeau numérique » du passeport biométrique associé à une identité numérique, plus connu sous l'abréviation DTC (Digital Travel Credential).

Lors d'une demande de production d'un document de voyage, un e-livret va être généré, soit en complément du passeport électronique, soit en tant que titre de voyage indépendamment d'un passeport électronique. Le e-livret est sécurisé, personnalisé et personnalisable. Le e-livret et le DTC, associés de manière logique, pourront être stockés de manière sécurisée sur un terminal mobile, par exemple, sur un téléphone mobile intelligent ou Smartphone, une tablette ou tout autre dispositif équipé de moyens de communication, d'une ou de plusieurs zones mémoires pour stocker des données et d'un processeur pour exécuter les étapes du procédé selon l'invention qui vont être explicitées ci-après.

L'invention pourra également être utilisée pour délivrer une identité numérique pour les titres ne possédant pas de puce électronique, par exemple des laisser-passer utilisés dans certains pays.

A ce jour, un passeport est composé de deux éléments personnalisés, le livret physique et le circuit intégré ou puce électronique, dans laquelle sont stockées des informations numériques propres au titulaire. Le livret physique contient une zone optique reprenant des données permettant d'identifier le document (numéro, pays d'émission, date de validité, ...), ainsi que des informations d'identité du titulaire, sa photo et des sécurités numériques.

Un document numérique est a minima composé d'une page de données avec des sécurités numériques et d'une présentation des données biographiques et biométriques d'un ou de plusieurs usagers. Un livret numérique comprend, en plus, notamment, une page de garde graphiquement personnalisable, par exemple au couleur du pays émetteur, plusieurs pages personnalisables contenant des sécurités numériques et dont le contenu est évolutif même après son émission.

Le document US 2019/190718 décrit un procédé d'identification biométrique dans le cadre d'une procédure de renouvellement d'un passeport.

Dans la suite de la description, les définitions suivantes seront utilisées :
Les « éléments de sécurité » ou sécurités numériques sont définis comme des motifs ou d'autres éléments contenus dans ou sur le document d'identité qui vont permettre de sécuriser les informations contenues dans ledit document. C'est, par exemple, une bande destinée à la lecture optique, connue sous l'acronyme anglo-saxon MRZ (Machine Readable Zone) ou un hologramme qui s'anime avec le mouvement. Ces éléments seront appliqués sur le document en utilisant des techniques connues de l'homme du métier, telles que la réalité augmentée ou des techniques de traitement d'images.

Une sécurité numérique est en general composée de deux éléments distincts : une partie descriptive précisant les propriétés de la sécurité (position sur le document numérique, type, images constituantes de référence, etc.) stockée dans un système centralisé et une partie applicative stockée sur le téléphone permettant d'appliquer les effets à la consultation du document. Ceci permet d'augmenter la sécurité, les deux éléments devant être connus pour reproduire un document numérique donné.

L'usager désigne un usager titulaire d'un document numérique évolutif.

Une identité numérique est un ensemble d'attribut permettant d'identifier une personne de manière unique dans l'univers numérique. Dans le cadre de l'invention, l'identité numérique peut soit évoquer les données associées à l'identité soit un lien vers un identifiant ou encore un lien vers une preuve de cette identité.

Un modèle de document numérique est un ensemble de caractéristiques définissant les propriétés d'un document numérique.

L'objet de la présente invention est, notamment, de mettre en œuvre une solution qui dérive un document (un e-livret par exemple) associé à une identité numérique (un DTC par exemple), permettant ainsi d'offrir aux citoyens et aux états une facilité et une sécurité dans l'utilisation des données, notamment lors de déplacements d'un usager.

Le procédé consiste notamment à produire un document numérique associé à une identité numérique d'un usager générée soit à partir de la lecture de données contenues dans un document physique, soit lors d'une demande de production standard et d'établir un lien logique entre ces deux éléments qui seront stockés pour tout ou partie, de manière sécuritaire, dans une zone mémoire du dispositif mobile.

L'invention concerne un procédé pour générer un document numérique évolutif associé à une identité numérique selon la revendication 1.

Selon un mode de mise en œuvre du procédé, les données personnelles issues de l'identité numérique d'un usager sont transmises à l'application de génération du document numérique, après lecture d'un document physique et des données contenues dans une puce de ce document physique.

Les données personnelles issues de l'identité numérique d'un usager sont, par exemple, transmises à l'application de génération du document numérique directement lors de la génération du document numérique.

On peut utiliser comme clé publique, la clé publique PK_{pub} de l'usager pour chiffrer le deuxième fichier F_{2spc}.

Il est possible de mémoriser les valeurs de Hash dans une base de données stockant les documents numériques générés.

Le fichier peut être stocké dans une base de données centralisée ou décentralisée et on transmet un lien associé aux fichiers, ledit lien étant mémorisé dans la base de données du terminal mobile de l'usager.

Le procédé selon l'invention peut comporter, en outre, une étape de mise à jour des informations contenues dans le document numérique généré par ajout, par le dispositif émetteur desdites données, d'un fichier sécurisé de données.

Le procédé peut aussi comporter une étape de mise à jour des données initiales contenues dans le document numérique comprenant les étapes suivantes :
une autorité de confiance transmet à l'application de génération du document numérique un ensemble de données à ajouter,
- ladite application de génération du document numérique signe l'ensemble de données avec sa clé privée et enregistre le résultat dans un fichier F₂ mis à jour,
- le fichier F_{2SP} signé est chiffré avec la clé publique de l'usager,
- l'application de génération calcule une empreinte Hash du fichier chiffré et met à jour l'enregistrement d'origine dans une base de données en conservant le mécanisme de lien faible,
- le Hash calculé est transmis à l'application mobile du terminal mobile de l'usager et stocké dans la mémoire du terminal mobile de l'usager.

Le procédé peut comporter en outre une étape de vérification de l'authenticité des données contenues dans un document numérique et transmises par un usager caractérisé en ce qu'il comporte au moins les étapes suivantes :
- après consentement donné par l'usager à un dispositif de contrôle, ledit usager transmet un ensemble d'informations contenues dans son e-livret au dispositif de contrôle,
- ledit dispositif de contrôle T transmet ces informations à une application de vérification configurée pour interroger la base de données contenant les e-livrets et pour comparer lesdites données transmises par l'usager aux données contenues dans le e-livret mémorisé dans la base de données,
- l'application de vérification de l'authenticité des données retourne le résultat au dispositif de contrôle T.

L'invention concerne aussi un système de génération d'un document numérique évolutif associé à une identité numérique selon la revendication 11.

Selon un mode de réalisation, le terminal mobile de l'usager comprend un module configuré pour générer une clé publique.

Le document numérique généré est, par exemple, un passeport stocké dans une zone mémoire du terminal mobile dudit usager.

D'autres caractéristiques, détails et avantages de l'invention ressortiront à la lecture de la description faite en référence aux dessins annexés donnés à titre d'exemple illustratifs et non limitatifs et qui représentent, respectivement :
- la figure 1, un exemple de système permettant la production et la vérification d'un document numérique,
- la figure 2, une illustration des étapes mises en œuvre pour la génération d'un document numérique et son utilisation pour un contrôle d'identité,
- la figure 3, un exemple de succession d'étapes pour la génération d'un document numérique,
- la figure 4, un exemple d'étapes mises en œuvre pour le contrôle de l'authenticité des données contenues dans le document numérique.

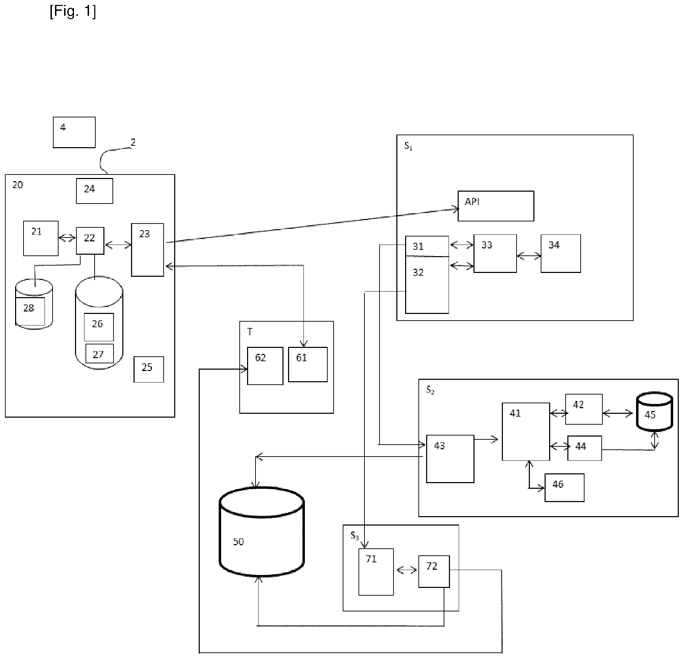

La figure 1 illustre un exemple de système permettant la génération d'un document numérique.

Les échanges de données entre les différents acteurs du système se font grâce à un réseau et un protocole de communication connus de l'homme du métier.

Le titulaire du document 2 possède un terminal mobile intelligent 20 équipé d'une application 21 d'acquisition de données et de chiffrement, et d'un processeur 22 configuré pour exécuter les étapes du procédé selon l'invention. Le terminal mobile intelligent est pourvu de moyens de communication 23 permettant des échanges de données avec les autres éléments du système, d'un dispositif 24 de lecture d'informations tel qu'une caméra, et d'un dispositif 25 de lecture de la puce, par exemple un dispositif de lecture sans contact intégré dans le terminal mobile de l'usager. Le terminal mobile comprend une zone mémoire 26. Ces éléments sont reliés au processeur.

Les informations lues par le terminal mobile seront, par exemple, des données personnelles d'identité, une photo, etc.

Dans certains scénarios, l'application 21 d'acquisition de données et de chiffrement, est notamment configurée pour acquérir les données contenues dans un document physique et nécessaire à l'établissement du document numérique. L'application mobile est aussi configurée pour pouvoir déchiffrer, entre autres, les données biographiques ou biométriques au moyen d'une clé privée, PKₚᵣᵢᵥ. La clé privée PKₚᵣᵢᵥ est, par exemple, mémorisée dans un container sécurisé 27 du terminal mobile. La clé publique PK_{pub} associée à la clé PKₚᵣᵢᵥ de l'usager pourra être transmise au système afin de chiffrer les données lors de la construction du document numérique. Les clés de chiffrement PK_{priv et} PK_{pub} pourront aussi être remplacées par des clés de chiffrement PK_{privsyst} et PK_{pubsyst} du système ou par un système de chiffrement des données avec un mot de passe. Dans ce cas, la clé privée ou le système de chiffrement se trouve, par exemple, dans un serveur sécurisé de type HSM (Hardware Security Module) non représenté sur la figure pour des raisons de simplification.

Le terminal mobile comprend aussi une base de données 28 pour le stockage d'un catalogue décrivant le mode d'application des sécurités numériques.

Le titulaire du document 2 est, par exemple, en possession d'un document physique 4 sur lequel sont imprimées des données personnelles et propres à l'usager qui peut aussi contenir une puce contenant des données d'identité. Selon une autre variante de réalisation, les données pourront provenir d'un processus d'enrôlement en mairie ou en préfecture, sans lecture de document physique ou d'une identité numérique régalienne.

Dans une variante de réalisation, le titulaire du document 2 collecte ses données biographiques, biométriques, documentaires, la clé publique de chiffrement, sur un système qui peut être :

Le terminal mobile de l'usager ou un kiosque de saisie d'informations pour une dérivation de l'identité numérique en toute autonomie par le détenteur à partir de son document physique original,

Par une autorité ou un tiers de confiance à partir de son document physique original pour une dérivation de l'identité numérique,

A partir d'une demande de titre émise par l'usager, indépendamment d'un titre physique, pour une délivrance de l'identité numérique par l'autorité concernée.

Le système de collecte formate les données en fonction du mode d'acquisition et selon une méthode d'acquisition connue de l'homme du métier.

Le système comprend aussi un premier serveur S₁ présentant une interface de programmation d'application API. Le premier serveur S₁ comprend des moyens de communication 31, 32, pour échanger des informations avec les terminaux mobiles des usagers et des « vérificateurs » d'informations, avec un deuxième serveur S₂ de production de document numérique et avec un troisième serveur S₃ utilisé dans le cas d'une vérification des données du document numérique, comme il sera détaillé ci-après. Le premier serveur S₁ possède un processeur 33 pour gérer les communications et une application 34 de contrôle d'intégrité des données issues de l'identité numérique. Le premier serveur S₁ utilise un réseau de communication local de type LAN (Local Area Network), par exemple, pour transmettre les données au deuxième serveur S₂ ou au troisième serveur S₃.

Le deuxième serveur S₂ de production de document numérique comporte un processeur 41 et une application de génération d'un document numérique 42 configurée pour générer un document numérique à partir des données d'identification de l'usager, des moyens de communication 43 pour échanger des informations via le réseau LAN avec le serveur S₁. Le serveur S₂ de production de document numérique comporte aussi un module de « signature » 43 configuré pour signer les données d'identification de l'usager et signer des constituants (éléments destinés à sécuriser le document numérique) du document numérique avec une clé privée PK_{privsyst} afin de protéger ces données d'une éventuelle altération. L'application 42 est configurée pour identifier à partir de ces données, un modèle de document numérique, se trouvant dans une base de données des modèles de personnalisation 45, au sein du deuxième serveur S₂. Par exemple, pour une demande de génération d'un e-livret d'un passeport diplomatique français l'application de génération de document numérique 42 initialise un livret numérique avec les propriétés définies par un modèle M caractérisant l'e-livret d'un passeport diplomatique français (par exemple : design graphique, orientation des pages par type (garde, données, visas...), nombre de pages, sécurités utilisées par type de page, position des données dynamiques (données qui peuvent être modifiées lors de la vie du document numérique). L'échange entre le système d'enrôlement est chiffré selon un processus connu de l'homme du métier. Le serveur S₂ comprend une application 46 configurée pour déchiffrer les données qu'il reçoit, vérifier leur conformité par rapport à un format donné et leur authenticité requise (intégrité des données et non altération), pour la génération du document numérique.

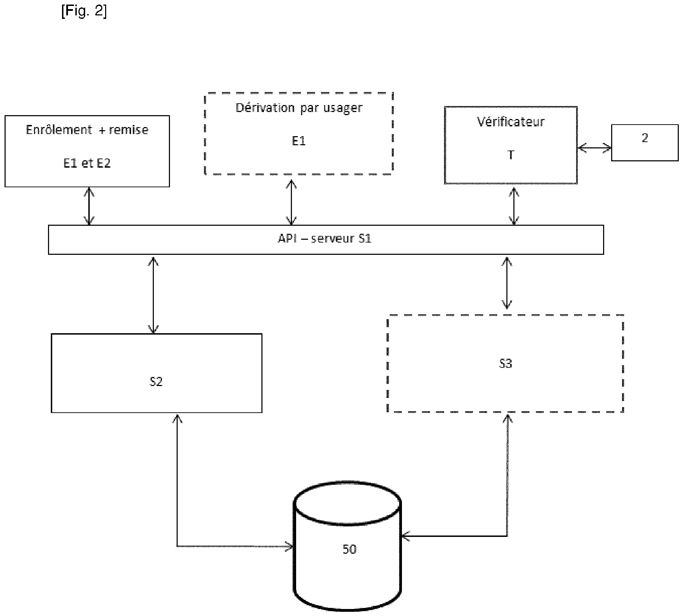

La figure 2 illustre les échanges de données entres les différents éléments précités et constituant le système.

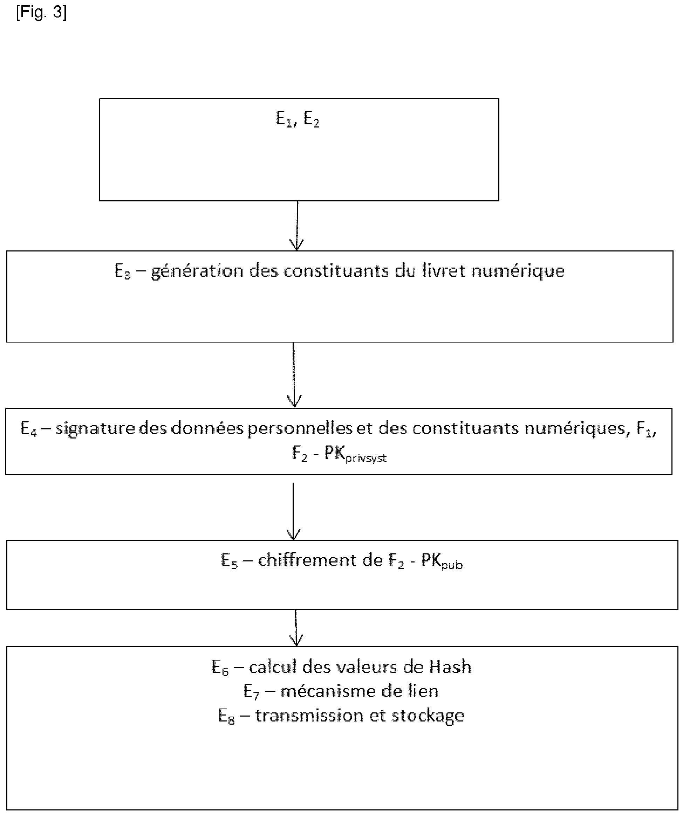

La figure 3 illustre les étapes exécutées pour la génération d'un e-livret dans le cadre d'une dérivation de son passeport par un usager, c'est-à-dire lorsque la lecture des données est réalisée par l'usager. Lors d'une première étape E₁, un usager lit les données d'identité contenues dans le passeport biométrique, par exemple au moyen de la caméra de son terminal mobile et du lecteur de puce en champ proche intégré, lecteur NFC (Near Communication Field).

L'étape, E₂, de lecture des données par l'usager et à partir d'un document physique peut être remplacée par une étape d'acquisition des données lors d'un processus d'enrôlement d'un usager ou encore d'une identité numérique régalienne.

Les données d'identité sont transmises au serveur S₂. Sur réception des données d'identité, le processeur 41 du serveur S₂ exécute l'application 42 de génération (production) de document numérique, lors d'une troisième étape E₃ afin de générer le document numérique, sous forme de fichier F₁, à partir des constituants du modèle M, par exemple les images de fond des pages ou les éléments de sécurité utilisés pour protéger les informations contenues dans le document numérique, ou tout autre élément, qui seront notamment préenregistrés dans la base de données des modèles 45. Lors de cette étape, le système peut ou non associer un identifiant unique au document numérique et notariser la transaction dans une chaine de blocs ou « blockchain ».

Lors d'une quatrième étape E₄, le module de signature 44 va ensuite signer le fichier F₁ avec une clé privée PK_{privsyst} afin de protéger le document numérique de l'altération et créer le fichier F₁ₛₚ qui contient les constituants signés et protégés du document numérique.

La clé privée PK_{privsyst} est aussi utilisée par l'application de production afin de signer les données personnelles issues de l'identité numérique de l'usager afin de les protéger d'une éventuelle altération et créer un deuxième fichier F₂ₛₚ.

A l'issue de cette quatrième étape E₄, l'application de production a généré deux fichiers de données.

Lors d'une cinquième étape, E₅, les données contenues dans le deuxième fichier F₂ sont chiffrées avec la clé de chiffrement publique PK_{pub} de l'usager ou avec une clé publique fournie par le système, ou encore au moyen d'un mot de passe ou de tout autre moyen approprié, pour produire un fichier F_{2spc}.

Lors d'une sixième étape, E₆, l'application 42 de production du document numérique va calculer une empreinte ou Hash des fichiers (F₁ₛₚ = F₁ fichier signé par la clé privée et F_{2spc} = F₂ fichier signé par la clé privée et chiffré ensuite par la clé publique), qu'il enregistre dans la base de données 50. La base de données peut être décentralisée, par exemple, une « blockchain ».

Lors d'une septième étape, E₇, l'application de production de document numérique sous certaines conditions (réglementation, consentement ...) mémorise les deux fichiers dans une base de données 50 stockant des documents numériques générés.

Lors d'une huitième étape, E₈, l'application de production de document numérique transmet le fichier F₁ₛₚ et le fichier F_{2spc}, la valeur de Hash, H₁, H₂, afin qu'il mémorise ces valeurs dans une zone mémoire 26 de son téléphone mobile pour une utilisation future. Un autre cas d'usage consiste à stocker le fichier F_{2spc} dans une base de données, qui peut être centralisée ou décentralisée, et à transmettre au terminal mobile une référence ou lien vers ce fichier au lieu de transmettre le fichier complet au terminal mobile.

L'usager 2 détenteur du passeport reçoit sur son téléphone une notification émise par le système. Les éléments représentant le document numérique sont transmis par le serveur S₂ via le serveur S₁. Les fichiers sont stockés dans la mémoire du terminal mobile de l'usager. Le terminal mobile possède un catalogue décrivant le mode d'application des sécurités numériques stockées dans la base de données 50.

Le document numérique peut être consulté visuellement dans une application présente sur le terminal mobile de l'usager et configurée pour la consultation de données. Lorsque le détenteur affiche le document numérique, par exemple un e-livret, les données issues du fichier F₂ sont affichées et les sécurités numériques décrites dans le fichier F₁ s'appliquent dynamiquement sur les pages du document en fonction de la configuration. Dans le cas d'un chiffrement par une clé fournie par l'usager, la clé privée permettant de déchiffrer les données est présente sur le téléphone de l'usager. Elle est accessible après authentification selon un mécanisme connu de l'homme du métier. Les données seront affichables dès que l'accès à la clé privée sera possible, au moyen d'un code d'identification personnel PIN, avec un contrôle de biométrie, etc. Dans le cas d'un lien vers une identité numérique, le terminal mobile se connectera au système stockant l'identité numérique pour en récupérer les attributs.

Le téléphone du détenteur présente une fonctionnalité permettant à ce dernier de naviguer sur l'ensemble des pages du document numérique pour consulter les informations présentes dans son document et visualiser les sécurités numériques. Ceci permet au détenteur du document numérique de consulter le contenu de ce dernier en allant de page en page, par un bouton ou par des gestes.

Le procédé selon l'invention permet de générer un document numérique contenant des zones ou des pages pouvant être mises à jour.

Il est ainsi possible d'ajouter des informations au document numérique même après son émission en appelant les interfaces dédiées à cet usage.

Par exemple, lors d'un voyage à l'étranger, les enregistrements de voyage correspondant à l'entrée et à la sortie sur un territoire de l'usager sont stockés et associés logiquement au document numérique dans des fichiers distincts signés, par exemple avec un lien en base de données. Les informations stockées dans ces fichiers sont, par exemple, l'état d'embarquement/débarquement, l'approbation du visa, la date du voyage, l'autorité et le lieu d'inspection, le mode de voyage, la durée du séjour. Ces informations peuvent s'afficher dynamiquement lors de la consultation du document numérique dans la zone prévue à cet effet.

Un autre exemple concerne le visa. En amont du voyage, il peut être nécessaire de demander un visa pour entrer sur un territoire. Cette démarche est désormais effectuée en ligne. Dans le cadre de l'invention, un usager voyageur peut utiliser son identité numérique DTC pour faire sa demande auprès du pays émetteur du visa. Dans ce cas, lors de l'émission du visa, le pays émetteur enverra, via une interface, sur l'application mobile de l'usager un visa électronique signé. Le visa est stocké et associé logiquement, par exemple avec un lien en base de données au e-livret, par un mécanisme connu de l'homme du métier. Les visas, plus communément appelés e-visa, peuvent s'afficher dynamiquement lors de la consultation du document numérique.

Un autre exemple concerne les points d'un permis de conduire. Lors d'une infraction ou d'une restitution, le nombre de point d'un permis de conduire évolue. Le ministère gestionnaire enverra via une interface, sur l'application mobile de l'usager, l'information mise à jour et signée pour en valider la provenance.

L'ajout d'une donnée au document se fera par une interface sécurisée. Le système externe, qui peut être une API, un équipement de contrôle, un tampon électronique utilise un moyen de communication, internet ou courte portée, qui peut être des ultrasons, du Bluetooth, de la communication en champ proche NFC (Near Filed Communication), etc., pour ajouter l'information au document numérique.

L'information ajoutée peut être un fichier binaire, une image ou une information textuelle. La donnée ajoutée est sécurisée par le système qui va ajouter l'information. Par exemple, le pays émetteur d'un visa va vérifier les informations du visa permettant l'entrée ou le séjour dans son pays. L'information est affichable sur une des pages du document numérique. Le contrôle (authenticité) de cet élément est assuré par le système d'origine. S'il s'agit, par exemple, d'un visa sous forme de code barre en deux dimensions ou QR Code, il appartient au système émetteur du visa de vérifier son authenticité.

Durant le cycle de vie, les données initiales du document et de l'identité numérique peuvent être mises à jour par une autorité de confiance émettrice. Pour cela, après un nouveau processus d'enrôlement, lorsque le système reçoit un nouvel ensemble de données, un processus du serveur S₂ signe les données avec sa clé privée PK_{privsyst} et enregistre le résultat dans sa mémoire sous la forme d'un fichier F₂. Le fichier F₁ contenant les constituants n'est pas modifié.

Un processus du serveur S₂ chiffre le fichier F₂ avec la clé publique de l'usager ou du système. Un processus du serveur S₂ calcule un Hash H₂ du fichier F₂ chiffré, et met à jour, le cas échéant, les enregistrements d'origine dans la base de données 50 contenant les documents numériques, en conservant le mécanisme de lien faible créé lors de la génération du document numérique d'origine, ainsi que la traçabilité du changement. Dans le cas d'un stockage du fichier F₂ sur le terminal mobile, le serveur S₂ transmet le nouveau fichier F₂ chiffré via le serveur S₁ à l'application du mobile de l'usager. Le fichier chiffré F₂ représentant les données d'identité de l'usager est stocké dans la mémoire du téléphone mobile de l'usager.

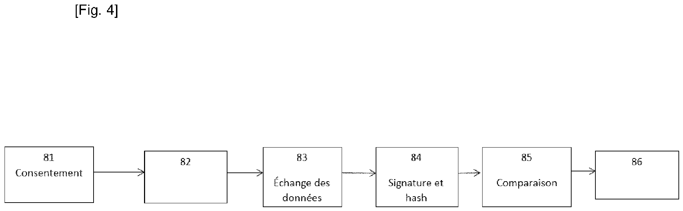

Le système permet aussi d'effectuer une vérification du contenu des données d'un document numérique, comme il est illustré sur la figure 4. La vérification sera réalisée par un tiers assermenté équipé d'un terminal mobile T qui va faire appel à un serveur de contrôle S₃.

Le terminal mobile T est équipé d'un module de communication 61 qui lui permet de dialoguer avec le serveur S₁ via l'interface API, vers le serveur S₃ pour lui transmettre les données ou informations qu'il aura échangées de manière sécurisé avec le terminal mobile de l'usager.

Le serveur S₃ (Fig.1) comprend un module de communication 71 et une application 72 configurée pour vérifier, notamment, les signatures et les valeurs de Hash H₁, H₂, des fichiers numériques et les sécurités sur un document numérique, désignées sous l'expression « sécurités numériques ». Un exemple d'étapes mises en œuvre pour le contrôle d'authenticité de données transmises par un usager est illustré en figure 4.

Lors d'une vérification du contenu du document numérique, l'usager donne son consentement pour une vérification, première étape 81. Une communication sécurisée est engagée, deuxième étape 82, entre le terminal mobile de l'usager et le terminal T du tiers assermenté pour vérifier les données par un moyen de communication courte portée, par exemple, par liaison Bluetooth, par la technologie champ proche NFC, ou par le protocole Wifi Aware. Un autre exemple de vérification peut impliquer la caméra du terminal T qui permet de contrôler une ou plusieurs sécurités numériques filmées et analysées par un processus d'analyse d'image.

Le consentement d'un usager ou détenteur du document peut être donné selon des échanges connus de l'homme du métier. Par exemple, par affichage d'un QR Code au niveau du terminal mobile ou en utilisant une communication en champ proche NFC permettant d'échanger les paramètres techniques (clé de session, protocole, ...) et engager la communication. Selon un autre mode de réalisation, le tiers « vérificateur » va transmettre des requêtes de consentement explicite à l'usager.

Lors d'une troisième étape 83, le terminal mobile de l'usager et le terminal mobile du tiers assermenté échangent les données (i.e. biographique, biométrique, documentaire, droits, ...) nécessaires aux contrôles, les signatures et les Hash des deux fichiers F₁ et F₂, et les sécurités numériques. Lors d'une quatrième étape 84, l'application du tiers assermenté envoie, via son module de communication, les signatures et Hash des fichiers au serveur de vérification S₃ et les sécurités numériques afin qu'elles soient comparées aux données connues dans la base de données des documents numériques. Pour cela, cinquième étape 85, l'application de S₃ qui reçoit ces informations interroge la base de données 50 contenant les documents numériques et vérifie la cohérence entre les données (données de sécurités, valeurs de hash) qu'il a reçues de la part de l'usager. L'application de vérification du serveur S₃ renvoie, étape 86, un résultat de l'analyse d'authenticité au tiers assermenté.

Le tiers assermenté peut vérifier les sécurités numériques présentes dans le document numérique, les valeurs de hash, les données d'identité.

Le procédé et le système selon l'invention présentent notamment les avantages suivants :
Le document numérique est accessible via une application installée sur un dispositif mobile. A travers cette application et le système associé, on garantit que :
- l'authenticité et la non-altération du document numérique est vérifiable,
- le document numérique est partageable pour le processus de « connaissance du client » plus connu sous l'acronyme anglo-saxon KYC (Know Your Customer),
- la présence et le lien avec l'identité numérique est vérifiable,
- il est possible d'y ajouter des informations (e-visas, points, traçabilité de contrôle), de les consulter et de les vérifier.

## Revendications

1. Procédé pour générer un document numérique évolutif associé à une identité numérique, ledit document numérique sera stocké sous format d'un fichier au niveau d'un terminal mobile d'un usager, **caractérisé en ce qu'**il comporte au moins les étapes suivantes :
- une étape de réception, par un dispositif équipé d'une application (42) configurée pour générer un document numérique, de données personnelles associées à l'identité numérique d'un usager et une étape de génération E₃ d'un ensemble de constituants destinés à sécuriser ledit document numérique, à partir d'un modèle M, sous la forme d'un fichier F₁,
- une étape de signature par un module de signature de donnés (44) desdits constituants numériques en utilisant une clé privée (PKₚᵣᵢᵥ,PK_{privsyst}) afin de générer un premier fichier F₁ₛₚ contenant les constituants du document numérique signés et protégés,
- une étape de signature (E₄) par ledit module de signature de données (44) en utilisant ladite clé privée (PKₚᵣᵢᵥ, PK_{privsyst}) des données personnelles issues de l'identité numérique afin de les protéger et de générer un deuxième fichier F₂ₛₚ,
- une étape de chiffrement E₅ des données personnelles protégées du deuxième fichier F₂ₛₚ par une clé publique (PK_{pub}, PK_{pubsyst}),
- une étape de calcul (E6) par l'application (42) de production du document numérique d'une valeur d'empreinte Hash pour chacun des fichiers F₁ₛₚ et F_{2spc}, une étape d'application d'un mécanisme de lien auxdites valeurs calculées de Hash, et une étape de transmission (E₈) des valeurs de Hash audit usager pour un stockage au niveau du terminal mobile dudit usager, le document numérique étant consultable visuellement dans une application présente sur le terminal mobile de l'usager et configurée pour la consultation de données ; et, lorsque l'usager affiche le document numérique, une étape dans laquelle les données issues du fichier F₂ₛₚ sont affichées et les sécurités numériques décrites dans le fichier F₁ₛₚ s'appliquent dynamiquement sur les pages du document en fonction de la configuration.

2. Procédé selon la revendication 1[,]**caractérisé en ce que** les données personnelles issues de l'identité numérique d'un usager sont transmises à l'application de génération du document numérique (42) après lecture par l'usager d'un document physique et des données contenues dans une puce de ce document physique.

3. Procédé selon la revendication 1 **caractérisé en ce que** les données personnelles issues de l'identité numérique d'un usager sont transmises à l'application de génération du document numérique (42) directement lors de la génération du document numérique.

4. Procédé selon l'une des revendications 1 à 3 **caractérisé en ce que** l'on utilise la clé publique PK_{pub} de l'usager pour chiffrer le deuxième fichier F_{2spc}.

5. Procédé selon l'une des revendications 1 à 4 **caractérisé en ce que** l'on mémorise les valeurs de Hash dans une base de données stockant les documents numériques générés.

6. Procédé selon l'une des revendications 1 à 4 **caractérisé en ce que** l'on transmet un lien associé aux fichiers et on mémorise ledit lien dans la base de données du terminal mobile de l'usager.

7. Procédé selon l'une des revendications 1 à 6, **caractérisé en ce qu'**il comporte une étape de mise à jour des informations contenues dans le document numérique généré par ajout d'un fichier sécurisé de données par le dispositif émetteur desdites données.

8. Procédé selon la revendication 7, **caractérisé en ce que** le document numérique est un permis de conduire comportant un nombre de points apte à être mis jour.

9. Procédé selon l'une des revendications 1 à 8, **caractérisé en ce qu'**il comporte en outre une étape de mise à jour des données initiales contenues dans le document numérique comprenant les étapes suivantes :
- une autorité de confiance transmet à l'application de génération du document numérique un ensemble de données à ajouter, [ladite]
- ladite application de génération du document numérique signe l'ensemble de données avec sa clé privée et enregistre le résultat dans un fichier F₂ mis à jour,
- Le fichier F₂ₛₚ signé est chiffré avec la clé publique de l'usager,
- l'application de génération calcule une empreinte Hash du fichier chiffré et met à jour l'enregistrement d'origine dans une base de données en conservant le mécanisme de lien faible,
- le Hash calculé est transmis à l'application mobile du terminal mobile de l'usager et stocké dans la mémoire du terminal mobile de l'usager.

10. Procédé selon l'une des revendications 1 à 9, **caractérisé en ce qu'**il comprend une étape de vérification de l'authenticité des données contenues dans un document' numérique et transmises par un usager **caractérisé en ce qu'**il comporte au moins les étapes suivantes :
- après consentement donné par l'usager à un dispositif de contrôle (T), ledit usager transmet (82) un ensemble d'informations contenues dans son e-livret au dispositif de contrôle,
- ledit dispositif de contrôle T transmet ces informations (84) à une application de vérification (72) configurée pour interroger la base de données (50) contenant les e-livrets et pour comparer lesdites données transmises par l'usager aux données contenues dans le e-livret mémorisé dans la base de données, (85),
- l' application de vérification de l'authenticité des données (72) retourne le résultat au dispositif de contrôle T.

11. Système de génération d'un document numérique évolutif associé à une identité numérique qui sera stocké sous format d'un fichier dans une zone mémoire d'un terminal mobile d'un usager, **caractérisé en ce qu'**il comporte au moins les éléments suivants :
- un serveur S₁ comprenant des moyens de communication (31, 32),
- un serveur S₂ équipé processeur (41) pourvu :
[i.] d une application (42) configurée pour générer un document numérique et calculer des valeurs d'empreintes de fichiers,
[ii.] de moyens de communication (43),
[iii.] d'un module de signature de donnés (44) configuré [:]
[a.] pour signer un ensemble de constituants numériques en utilisant une clé privée, PK_{privsyst}, afin de générer un premier fichier F₁ₛₚ contenant des constituants du document numérique signés et protégés,
[b.] pour signer en utilisant ladite clé privée PK_{privsyst} les données personnelles issues de l'identité numérique afin de les protéger et générer un deuxième fichier F₂ₛₚ,
- une clé publique PK_{pub} choisie pour signer le deuxième fichier F₂ₛₚ et générer un fichier F_{2spc} contenant les données personnelles,
- une base de données (50) stockant des documents numériques,
le terminal mobile de l'usager étant configuré de sorte que le document numérique est consultable visuellement dans une application présente sur le terminal mobile et configurée pour la consultation de données ; et, lorsque l'usager affiche le document numérique, les données issues du fichier F₂ₛₚ sont affichées et les sécurités numériques décrites dans le fichier F₁ₛₚ s'appliquent dynamiquement sur les pages du document en fonction de la configuration.

12. Système selon la revendication 11, **caractérisé en ce que** le terminal mobile de l'usager comprend un module configuré pour générer une clé publique.

13. Système selon la revendication 11 ou 12, **caractérisé en ce que** le document numérique généré est un passeport stocké dans une zone mémoire du terminal mobile dudit usager.

14. Système selon la revendication 13, **caractérisé en ce que** le passeport comprend un visa électronique signé, ledit visa électronique signé étant apte à s'afficher dynamiquement lors d'une consultation dudit passeport par l'usager.

## Patentansprüche

1. Verfahren zur Erzeugung eines evolutiven digitalen Dokuments, das mit einer digitalen Identität assoziiert ist, wobei das genannte digitale Dokument im Format einer Datei an einem mobilen Endgerät eines Nutzers gespeichert sein wird, **dadurch gekennzeichnet, dass** es mindestens die folgenden Schritte beinhaltet:
- einen Schritt des Empfangens, durch ein Gerät, das mit einer zum Erzeugen eines digitalen Dokuments konfigurierten Anwendung (42) ausgestattet ist, von mit der digitalen Identität eines Nutzers assoziierten persönlichen Daten, und einen Schritt des Erzeugens E₃ eines Satzes von Bestandteilen, die zum Sichern des genannten digitalen Dokuments bestimmt sind, auf der Basis einer Vorlage M, in Form einer Datei F₁,
- einen Schritt des Signierens, durch ein Datensignaturmodul (44), der genannten digitalen Bestandteile mittels eines privaten Schlüssels (PKₚᵣᵢᵥ, PK_{privsyst}), um eine erste Datei F₁ₛₚ zu erzeugen, die die signierten und geschützten Bestandteile des digitalen Dokuments enthält,
- einen Schritt des Signierens (E₄), durch das genannte Datensignaturmodul (44) mittels des genannten privaten Schlüssels (PKₚᵣᵢᵥ, PK_{privsyst}), der aus der digitalen Identität stammenden persönlichen Daten, um sie zu schützen und eine zweite Datei F₂ₛₚ zu erzeugen,
- einen Schritt des Verschlüsselns E₅ der geschützten persönlichen Daten der zweiten Datei F₂ₛₚ mittels eines öffentlichen Schlüssels (PK_{pub}, PK_{pubsyst}),
- einen Schritt des Berechnens (E6), durch die Anwendung (42) zum Produzieren des digitalen Dokuments, eines Hash-Fingerabdruckwerts für jede der Dateien F₁ₛₚ und F_{2spc}, einen Schritt des Anwendens eines Link-Mechanismus auf die genannten berechneten Hash-Werte, und einen Schritt des Übertragens (E₈) der Hash-Werte zu dem genannten Nutzer zur Speicherung am mobilen Endgerät des genannten Nutzers, wobei das digitale Dokument in einer auf dem mobilen Endgerät des Nutzers vorhandenen und für die Abfrage von Daten konfigurierten Anwendung visuell abrufbar ist; und, wenn der Nutzer das digitale Dokument anzeigt, einen Schritt, in dem die aus der Datei F₂ₛₚ stammenden Daten angezeigt werden und die in der Datei F₁ₛₚ beschriebenen digitalen Sicherheiten dynamisch auf die Seiten des Dokuments in Abhängigkeit von der Konfiguration angewendet werden.

2. Verfahren nach Anspruch 1, **dadurch gekennzeichnet, dass** die aus der digitalen Identität eines Nutzers stammenden persönlichen Daten zu der Anwendung zur Erzeugung des digitalen Dokuments (42) übertragen werden, nachdem der Nutzer ein physisches Dokument und die in einem Chip dieses physischen Dokuments enthaltenen Daten gelesen hat.

3. Verfahren nach Anspruch 1, **dadurch gekennzeichnet, dass** die aus der digitalen Identität eines Nutzers stammenden persönlichen Daten direkt bei der Erzeugung des digitalen Dokuments zu der Anwendung zur Erzeugung des digitalen Dokuments (42) übertragen werden.

4. Verfahren nach einem der Ansprüche 1 bis 3, **dadurch gekennzeichnet, dass** der öffentliche Schlüssel PK_{pub} des Nutzers zum Verschlüsseln der zweiten Datei F_{2spc} verwendet wird.

5. Verfahren nach einem der Ansprüche 1 bis 4, **dadurch gekennzeichnet, dass** die Hash-Werte in einer die erzeugten digitalen Dokumente speichernden Datenbank gespeichert werden.

6. Verfahren nach einem der Ansprüche 1 bis 4, **dadurch gekennzeichnet, dass** ein mit den Dateien assoziierter Link übertragen wird und der genannte Link in der Datenbank des mobilen Endgeräts des Nutzers gespeichert wird.

7. Verfahren nach einem der Ansprüche 1 bis 6, **dadurch gekennzeichnet, dass** es einen Schritt des Aktualisierens der in dem erzeugten digitalen Dokument enthaltenen Informationen durch Hinzufügen einer gesicherten Datendatei durch das die genannten Daten sendende Gerät beinhaltet.

8. Verfahren nach Anspruch 7, **dadurch gekennzeichnet, dass** das digitale Dokument ein Führerschein mit einer Punktzahl ist, die aktualisiert werden kann.

9. Verfahren nach einem der Ansprüche 1 bis 8, **dadurch gekennzeichnet, dass** es außerdem einen Schritt des Aktualisierens der im digitalen Dokument enthaltenen Ausgangsdaten beinhaltet, das die folgenden Schritte beinhaltet:
- Übertragen, durch eine vertrauenswürdige Autorität, eines Satzes von hinzuzufügenden Daten zu der Anwendung zur Erzeugung des digitalen Dokuments,
- Signieren, durch die genannte Anwendung zur Erzeugung des digitalen Dokuments, des Datensatzes mit seinem privaten Schlüssel und Speichern des Ergebnisses in einer aktualisierten Datei F₂,
- Verschlüsseln der signierten Datei F₂ₛₚ mit dem öffentlichen Schlüssel des Nutzers,
- Berechnen, durch die Anwendung zur Erzeugung, eines Hash-Fingerabdrucks der verschlüsselten Datei und Aktualisieren der ursprünglich gespeicherten Version in einer Datenbank unter Beibehaltung des schwachen Link-Mechanismus,
- Übertragen des berechneten Hash-Wertes zu der mobilen Anwendung des mobilen Endgeräts des Nutzers und Speichern desselben im Speicher des mobilen Endgeräts des Nutzers.

10. Verfahren nach einem der Ansprüche 1 bis 9, **dadurch gekennzeichnet, dass** es einen Schritt des Verifizierens der Authentizität der in einem digitalen Dokument enthaltenen und von einem Nutzer übertragenen Daten beinhaltet, **dadurch gekennzeichnet, dass** es mindestens die folgenden Schritte beinhaltet:
- Übertragen (82), nach der Zustimmung, die der Nutzer einem Kontrollgerät (T) erteilt hat, eines Satzes von in seinem E-Booklet enthaltenen Informationen zu dem Kontrollgerät,
- Übertragen, durch das genannte Kontrollgerät T, dieser Informationen (84) zu einer Anwendung zur Verifizierung (72), die so konfiguriert ist, dass sie die die E-Booklets enthaltende Datenbank (50) abfragt und die genannten vom Nutzer übertragenen Daten mit den Daten vergleicht, die in dem in der Datenbank gespeicherten E-Booklet enthalten sind (85),
- Zurückgeben, durch die Anwendung zur Verifizierung der Authentizität der Daten (72), des Ergebnisses an das Kontrollgerät T.

11. System zur Erzeugung eines evolutiven digitalen Dokuments, das mit einer digitalen Identität assoziiert ist, die im Format einer Datei in einer Speicherzone eines mobilen Endgeräts eines Nutzers gespeichert sein wird, **dadurch gekennzeichnet, dass** es mindestens die folgenden Elemente umfasst:
- einen Server S₁, der Kommunikationsmittel (31, 32) umfasst,
- einen Server S₂, ausgestattet mit einem Prozessor (41) mit:
i. einer Anwendung (42), die zum Erzeugen eines digitalen Dokuments und zum Berechnen von Fingerabdruckwerten von Dateien konfiguriert ist,
ii. Kommunikationsmitteln (43),
iii. einem Datensignaturmodul (44), konfiguriert zum
a. Signieren eines Satzes von digitalen Bestandteilen mittels eines privaten Schlüssels, PK_{privsyst}, um eine erste Datei F₁ₛₚ zu erzeugen, die signierte und geschützte Bestandteile des digitalen Dokuments enthält,
b. Signieren, mittels des genannten privaten Schlüssels, PK_{privsyst}, der aus der digitalen Identität stammenden persönlichen Daten, um sie zu schützen und eine zweite Datei F₂ₛₚ zu erzeugen,
- einem öffentlichen Schlüssel PK_{pub}, ausgewählt zum Signieren der zweiten Datei F₂ₛₚ und zum Erzeugen einer die persönlichen Daten enthaltenden Datei F_{2spc},
- einer Datenbank (50), die digitale Dokumente speichert,
wobei das mobile Endgerät des Nutzers so konfiguriert ist, dass das digitale Dokument in einer auf dem mobilen Endgerät vorhandenen und für die Abfrage von Daten konfigurierten Anwendung visuell abrufbar ist; und, wenn der Nutzer das digitale Dokument anzeigt, die aus der Datei F₂ₛₚ stammenden Daten angezeigt werden und die in der Datei F₁ₛₚ beschriebenen digitalen Sicherheiten dynamisch auf die Seiten des Dokuments in Abhängigkeit von der Konfiguration angewendet werden.

12. System nach Anspruch 11, **dadurch gekennzeichnet, dass** das mobile Endgerät des Nutzers ein zum Erzeugen eines öffentlichen Schlüssels konfiguriertes Modul umfasst.

13. System nach Anspruch 11 oder 12, **dadurch gekennzeichnet, dass** das erzeugte digitale Dokument ein in einer Speicherzone des mobilen Endgeräts des genannten Nutzers gespeicherter Pass ist.

14. System nach Anspruch 13, **dadurch gekennzeichnet, dass** der Pass ein signiertes elektronisches Visum umfasst, wobei das genannte signierte elektronische Visum bei einer Abfrage des genannten Passes durch den Nutzer dynamisch angezeigt werden kann.

## Claims

1. Method for generating a changeable digital document associated with a digital identity, said digital document will be stored in the form of a file on a mobile terminal of a user, **characterized in that** it includes at least the following steps:
- a step of receiving, by a device equipped with an application (42) configured to generate a digital document, personal data associated with the digital identity of a user and a step of generating E₃ a set of constituents intended to secure said digital document, on the basis of a model M, in the form of a file F₁,
- a step of signing, by a data signature module (44), said digital constituents using a private key (PKₚᵣᵢᵥ, PK_{privsyst}), in order to generate a first file F₁ₛₚ containing the signed and protected constituents of the digital document,
- a step of signing (E₄), by said data signature module (44) using said private key (PKₚᵣᵢᵥ, PK_{privsyst}), the personal data originating from the digital identity in order to protect them and to generate a second file F₂ₛₚ,
- a step of encrypting E₅ the protected personal data of the second file F₂ₛₚ by means of a public key (PK_{pub}, PK_{pubsyst}),
- a step of calculating (E6), by the application (42) for producing the digital document, a hash fingerprint value for each of the files F₁ₛₚ and F_{2spc}, a step of applying a link mechanism to said calculated hash values, and a step of transmitting (E₈) the hash values to said user for storage on the mobile terminal of said user, it being possible to visually consult the digital document in an application present on the mobile terminal of the user and configured for the consultation of data; and, when the user displays the digital document, a step in which the data originating from the file F₂ₛₚ are displayed and the digital security features described in the file F₁ₛₚ are dynamically applied to the pages of the document according to the configuration.

2. Method according to claim 1, **characterized in that** the personal data originating from the digital identity of a user are transmitted to the application for generating the digital document (42) after the user has read a physical document and the data contained in a chip of this physical document.

3. Method according to claim 1, **characterized in that** the personal data originating from the digital identity of a user are transmitted to the application for generating the digital document (42) directly during the generation of the digital document.

4. Method according to one of claims 1 to 3, **characterized in that** the public key PK_{pub} of the user is used to encrypt the second file F_{2spc}.

5. Method according to one of claims 1 to 4, **characterized in that** the hash values are stored in a database storing the digital documents generated.

6. Method according to one of claims 1 to 4, **characterized in that** a link associated with the files is transmitted and said link is stored in the database of the mobile terminal of the user.

7. Method according to one of claims 1 to 6, **characterized in that** it includes a step of updating the information contained in the digital document generated by addition of a secured data file by the device transmitting said data.

8. Method according to claim 7, **characterized in that** the digital document is a driving licence containing a number of points capable of being updated.

9. Method according to one of claims 1 to 8, **characterized in that** it also includes a step of updating the initial data contained in the digital document comprising the following steps:
- a trusted authority transmits a data set to be added to the application for generating the digital document,
- said application for generating the digital document signs the data set with its private key and records the result in an updated file F₂,
- the signed file F₂ₛₚ is encrypted with the public key of the user,
- the generation application calculates a hash fingerprint of the encrypted file and updates the original record in a database by preserving the weak link mechanism,
- the calculated hash is transmitted to the mobile application of the mobile terminal of the user and stored in the memory of the mobile terminal of the user.

10. Method according to one of claims 1 to 9, **characterized in that** it comprises a step of verifying the authenticity of the data contained in a digital document and transmitted by a user, **characterized in that** it includes at least the following steps:
- after the user has given consent to a control device (T), said user transmits (82) a set of information contained in their e-booklet to the control device,
- said control device T transmits this information (84) to a verification application (72) configured to interrogate the database (50) containing the e-booklets and to compare said data transmitted by the user with the data contained in the e-booklet stored in the database (85),
- the application for verifying the authenticity of the data (72) returns the result to the control device T.

11. System for generating a changeable digital document associated with a digital identity which will be stored in the form of a file in a memory area of a mobile terminal of a user, **characterized in that** it includes at least the following elements:
- a server S₁ comprising communication means (31, 32),
- a server S₂ equipped with a processor (41) provided with:
i. an application (42) configured to generate a digital document and calculate fingerprint values of files,
ii. communication means (43),
a data signature module (44) configured to:
a. sign a set of digital constituents using a private key, PK_{privsyst}, in order to generate a first file F₁ₛₚ containing signed and protected constituents of the digital document,
b. sign, using said private key PK_{privsyst}, the personal data originating from the digital identity in order to protect them and generate a second file F₂ₛₚ,
- a public key PK_{pub}, chosen to sign the second file F₂ₛₚ and generate a file F_{2spc} containing the personal data,
- a database (50) storing digital documents,
the mobile terminal of the user being configured so that it is possible to visually consult the digital document in an application present on the mobile terminal and configured for the consultation of data; and, when the user displays the digital document, the data originating from the file F₂ₛₚ are displayed and the digital security features described in the file F₁ₛₚ are dynamically applied to the pages of the document according to the configuration.

12. System according to claim 11, **characterized in that** the mobile terminal of the user comprises a module configured to generate a public key.

13. System according to one of claims 11 or 12, **characterized in that** the digital document generated is a passport stored in a memory area of the mobile terminal of said user.

14. System according to claim 13, **characterized in that** the passport comprises a signed electronic visa, said signed electronic visa being capable of being dynamically displayed during a consultation of said passport by the user.
